# EUROPEAN PATENT APPLICATION

(11) **EP 2 409 900 A1**
(43) Date of publication of application: **25.01.2012**
(21) Application number: 10170328.8
(22) Date of filing: 21.07.2010
(51) Int. Cl.: B62D 29/00

(54) **Reinforcement aligned with axis of load**

(71) Applicant: Sika Technology AG, 6340 Baar (CH)
(72) Inventor: Meier, Michael, 5443, Niederrohrdorf (CH)
(74) Representative: Sika Patent Attorneys

(57) **Abstract**

An exemplary reinforcement (100) includes a carrier (105) having an array of cylinders (120). The carrier (105) is configured to be disposed in a structure (115), and each of the cylinders (120) defines an axis (A) aligned with a structural load (F) applied to the structure (115). The axes (A) defined by the cylinders (120) are parallel to one another and define a plane (P). A bonding material (110) is disposed on the carrier (105) and is configured to connect the carrier (105) to the structure (115).

## Description

### BACKGROUND

Reinforcements provide structural support without a significant increase in cost and weight. For instance, reinforcements may be used in automobiles to reinforce cavities formed by various parts of the automobile such as a pillar, bumper, etc. To properly transfer loads from one side of the structure to the other, the reinforcement has features that generally match the inner surfaces of the cavity in which the reinforcement is placed. However, those features in reinforcements are difficult and expensive to manufacture. Accordingly, a reinforcement is needed that provides the same or additional structural and/or acoustic support within a cavity with less complexity than previous reinforcements.

### SUMMARY

A reinforcement includes a carrier having an array of cylinders. The carrier is configured to be disposed in a structure, and each of the cylinders defines an axis aligned with a structural load applied to the structure. The axes defined by the cylinders are parallel to one another and define a plane. A bonding material is disposed on the carrier and is configured to connect the carrier to the structure.

### BRIEF DESCRIPTION OF THE DRAWINGS

Figure 1 illustrates an exemplary reinforcement disposed on a structure.

Figures 2A-2C illustrate exemplary cross-sectional views of exemplary cylinders used in the reinforcement.

Figure 3 illustrates an exemplary reinforcement having a carrier that includes a plurality of cylinders arranged in an array and with a bonding material disposed therein.

Figure 4 illustrates an exemplary carrier where some of the cylinders define gaps and the expandable material disposed within the gaps.

Figure 5 illustrates a top view of an exemplary reinforcement with a carrier having aligned cylinders.

Figure 6 illustrates a rear view of an exemplary reinforcement having a carrier that includes a plurality of cylinders, each having an axis, aligned such that the axes define a plane.

### DETAILED DESCRIPTION

An exemplary reinforcement that transfers a load from one part of a structure to another part of a structure includes a carrier having an array of cylinders. Each cylinder in the array extends in a direction that is parallel to the other carriers, and the cylinders are generally aligned in a plane. That is, each cylinder defines an axis and the axes defined by the cylinders are parallel to one another and define a plane. The carrier is configured to be disposed in a structure, and at least one of the cylinders defines an axis aligned with a structural load that may be applied to the structure. A bonding material is disposed on the carrier and is used to connect the carrier to the structure. A reinforcement having this arrangement is able to transfer a structural load between sidewalls of the structure with a sufficient performance to weight ratio but without complex manufacturing complexity and costs.

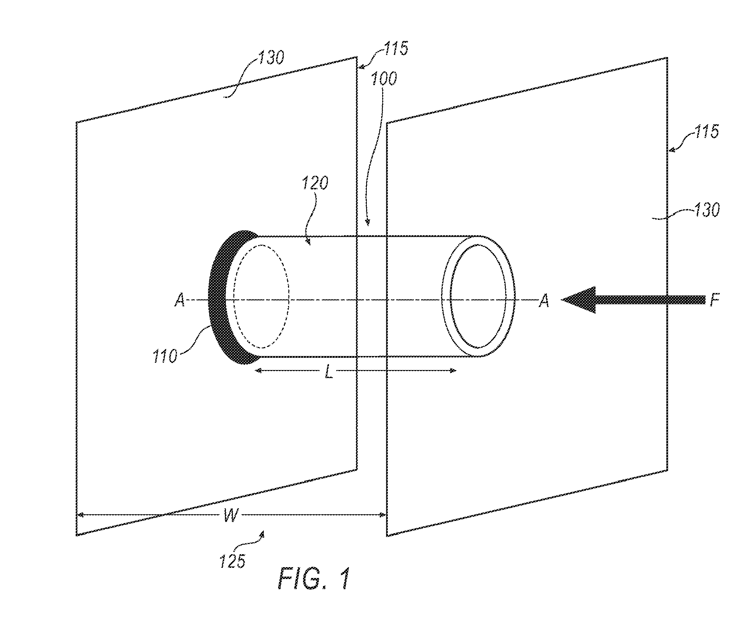

Figure 1 illustrates an exemplary reinforcement 100 that is able to transfer loads from one sidewall of a structure to another sidewall of the structure. The reinforcement 100 may take many different forms and include multiple and/or alternate components and facilities. While an exemplary reinforcement 100 is shown, the exemplary components illustrated in the figures are not intended to be limiting. Indeed, additional or alternative components and/or implementations may be used.

As illustrated in Figure 1, the reinforcement 100 includes a carrier 105 and bonding material 110 disposed on a structure 115. The carrier 105 may be formed from any material that provides structural support to the structure 115. For instance, the carrier 105 may be formed from a plastic, such as nylon. Moreover, the material from which the carrier 105 is made may include glass fibers. Alternatively, the carrier 105 may be formed from a metal such as steel, aluminum, or magnesium. The carrier 105 may be formed from various processes such as an overmolding or die-cut process.

The carrier 105 may include one or more cylinders 120 that are disposed within a space 125 defined by the structure 115. In one exemplary approach, the cylinders 120 are integrally formed with one another. Alternatively, the cylinders 120 may be formed separately and attached to one another using an adhesive to mechanical fastener. The cylinders 120 are generally aligned in a plane. That is, each cylinder 120 defines an axis A extending, for instance, through a center of the cylinder 120, and the axes A of the cylinders 120 are generally parallel to one another.

The cylinder 120 may be slightly smaller than the space 125 defined by the structure 115, and one or both ends of the cylinder 120 may be disposed on the structure 115. The cylinder 120 is generally hollow and defines the axis A near the center of the cylinder 120. The cylinder 120 is configured to be placed within the structure 115 so that the axis A defined by the cylinder 120 is generally aligned with forces F applied to one or both sides of the structure 115. This allows the cylinder 120 to distribute forces F applied to one side of the structure 115. That is, the forces F applied to one side of the structure 115 are able to travel through the cylinder 120 to the other side of the structure 115.

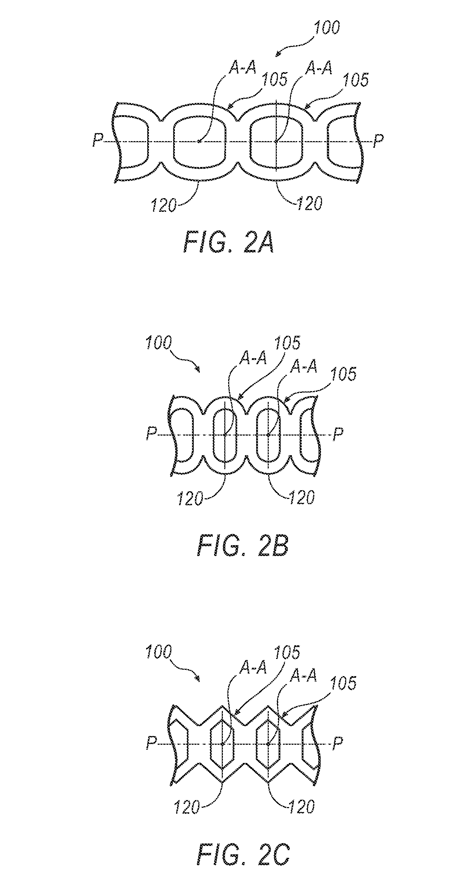

The cylinder 120 has a length L that is slightly smaller than a width W of the space 125. In one exemplary approach, the cylinder 120 may be approximately 2-8 mm smaller than the width W of the structure 115. The reinforcement 100 may be disposed within any space 125 defined by a structure 115, regardless of size or shape of the space 125. Therefore, when multiple cylinders 120 are used in the carrier 105, some of the cylinders 120 may be different lengths L than other cylinders 120. For example, if the space 125 defined by the structure 115 is tapered, the cylinders 120 may have appropriate lengths L to fit within the tapered space 125. Moreover, to accommodate a tapered shape, the ends of the cylinder 120 need not be parallel to one another. That is, one end of the cylinder 120 may define one plane and another end of the carrier 105 may define a transverse plane. Further, the carrier 105 may include any number of cylinders 120. For instance, Figure 1 illustrates an exemplary carrier 105 with only one cylinder 120 for ease of understanding. As illustrated in Figures 2-5, the carrier 105 may include more than one cylinder 120 arranged in an array.

The bonding material 110 is used to attach the carrier 105 to the structure 115. The bonding material 110 may be disposed on the carrier 105. For instance, the bonding material 110 illustrated in Figure 1 is disposed on an outside surface of the cylinder 120. Alternatively, the bonding material 110 may be disposed on an inside surface of the cylinder 120 (e.g., within the cavity). The bonding material 110 may include an adhesive or an expandable material such as a structural foam or an acoustic foam. The bonding material 110 may be configured to adhere the carrier 105 to the structure 115 when cured. Curing the bonding material 110 may include applying a hardener to the bonding material 110 or heating the bonding material 110.

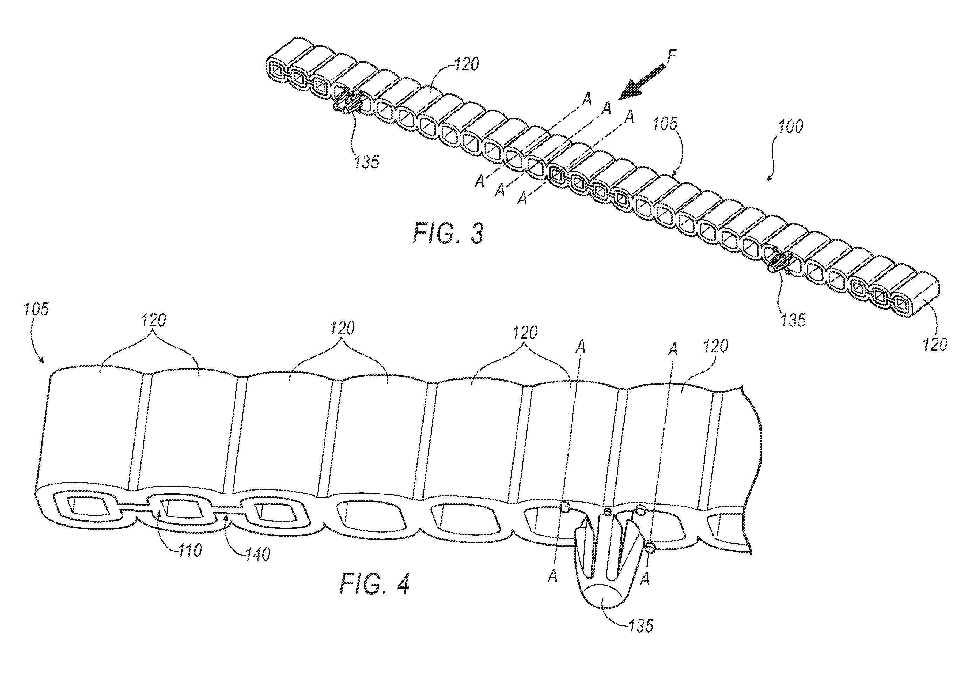

The structure 115 may include any object that defines the space 125. For instance, the structure 115 may include two sidewalls 130 that are spaced from one another such that the space 125 is defined between them. The sidewalls 130 may at least partially extend in a parallel direction. One or both sidewalls 130 may define openings (not shown) for receiving fixation elements 135 (see Figure 3) that further support the carrier 105 within the cavity. These openings may be on the parallel parts of the sidewalls 130. However, the sidewalls 130 need not be parallel and non-parallel portions of the structure 115 may be configured to receive the carrier 105. In one exemplary implementation, the structure 115 includes a portion of a vehicle and the space 125 is a cavity defined by the vehicle. Thus, the structure 115 may be a pillar, bumper, door, etc. of the vehicle.

Figures 2A-2C illustrate exemplary cross-sectional views of the cylinders 120 in the carrier 105. As illustrated, the cylinders 120 are substantially hollow and define the axis A. The cylinders 120 are substantially aligned such that the axes A define a plane P. That is, the plane P may extend transversely through the axes A of the cylinders 120 in the array. Figure 2A illustrates an exemplary cross-sectional view of the carrier taken along the line 2-2 of Figure 1. In Figure 2A, the cylinders 120 include two substantially curved portions in cross-section and two substantially straight portions in cross-section. The curved portions are spaced from one another and the straight portions are spaced from and parallel to one another. Figure 2B illustrates exemplary cylinders 120 that have a substantially oval shape in cross-section. Figure 2C illustrates exemplary cylinders 120 that have substantially hexagonal cross-sectional shapes. Of course, the cylinders 120 may have other cross-sectional shapes. For instance, the cylinders 120 may generally be round, rectangular, trapezoidal, triangular, etc. in cross-section.

Figure 3 illustrates an exemplary carrier 105 having a plurality of cylinders 120 disposed in an array and fixation elements 135 (e.g., clips) extending from one or more of the cylinders 120. Each cylinder 120 defines the axis A that, when disposed in the structure 115 (see Figure 1), is aligned with a structural load that may be placed on one of the sidewalls 130.

The fixation elements 135 may be used to fasten the carrier 105 to the sidewalls 130 of the structure 115. For instance, the structure 115 may define openings (not shown) that are configured to receive the fixation elements 135. The fixation elements 135 may be biased so that they hold the carrier 105 in place relative to the structure 115 when the fixation elements 135 are placed in the openings. For instance, the fixation element 135 may include a clip that contracts while being pushed into the opening and expands after the clip has been placed into the hole. Each fixation element 135 may be disposed on one cylinder 120, or alternatively, may be disposed between two cylinders 120.

With reference to Figures 3 and 4, the bonding material 110 is disposed within the cylinder 120. In particular, the bonding material 110 may partially line an inside surface of the cylinder 120. However, the bonding material 110 need not line the entire inside surface of the cylinder 120. As illustrated, the bonding material 110 may line the part of the inside surface of the cylinder 120 that is closest to one of the sidewalls 130. The bonding material 110 may be disposed on the inside surface of the cylinder 120 near one or both sidewalls 130. Further, the bonding material 110 need not be disposed on or within each cylinder 120 in the array. As illustrated, the bonding material 110 is only disposed within some of the cylinders 120. Reducing the number of cylinders 120 that carry the bonding material 110, and reducing the amount of bonding material 110 placed in the cylinders 120, may help reduce manufacturing costs.

One or more of the cylinders 120 may define gaps 140, for example, about their peripheries, that allow the bonding material 110 disposed within one cylinder 120 to connect to the bonding material 110 within another cylinder 120. Therefore, the gaps 140 provide a mechanical linkage of the bonding material 110 between cylinders 120 at least until the cylinder 120 is disposed in the space 125.

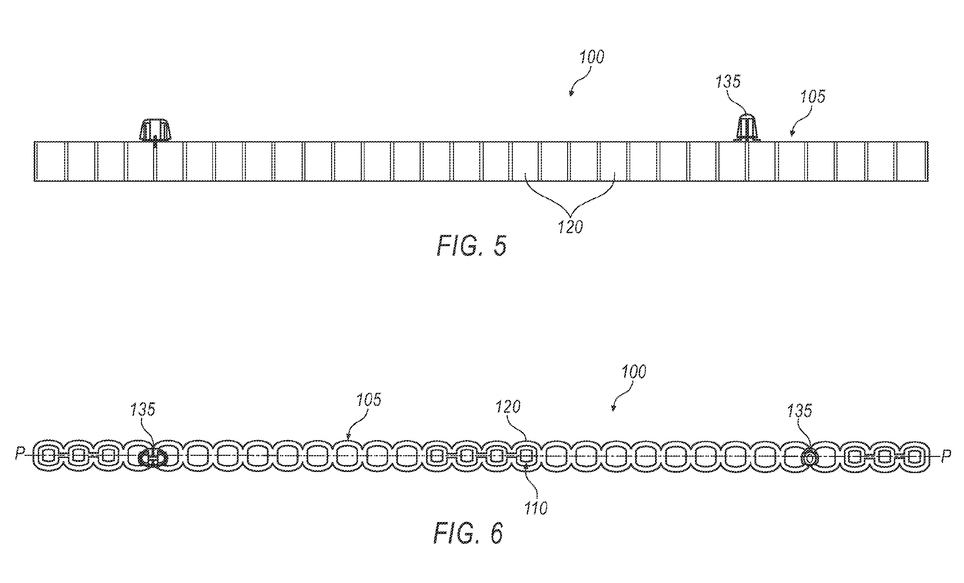

Figure 5 is a top view of an exemplary carrier 105 and Figure 6 is a rear view of an exemplary carrier 105. As illustrated, the cylinders 120 are disposed in an array and form a single layer. Accordingly, the axes A of the cylinders 120 define a single plane P. When placed in the structure 115, the axes A defined by each of the cylinders 120 are substantially aligned with a structural load that may be applied to one or both sidewalls 130. This configuration allows the carrier 105 to distribute the structural load between the sidewalls 130.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claimed invention.

Accordingly, it is to be understood that the above description is intended to be illustrative and not restrictive. Many embodiments and applications other than the examples provided would be apparent upon reading the above description. The scope of the invention should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the invention is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

## Claims

1. A reinforcement (100) comprising:
a carrier (105) having an array of cylinders (120) and configured to be disposed in a structure (115) providing a structural load (F), wherein each of the cylinders (120) defines an axis (A) aligned with a structural load (F) and wherein the axes (A) defined by the cylinders (120) are parallel to one another and define a plane (P); and
a bonding material (110) disposed on the carrier (105) and configured to connect the carrier (105) to the structure (115).

2. A reinforcement (100) as set forth in claim 1, wherein each of the cylinders (120) is substantially hollow and wherein the bonding material (110) is at least partially disposed in at least one of the cylinders (120).

3. A reinforcement (100) as set forth in claim 1 or 2, wherein at least two of the cylinders (120) define a gap (140) between them and wherein the bonding material (110) is at least partially disposed in the gap (140).

4. A reinforcement (100) as set forth in one of the preceding claims, wherein the bonding material (110) is disposed on at least one of the cylinders (120).

5. A reinforcement (100) as set forth in one of the preceding claims, wherein the bonding material (110) is disposed on at least one of the cylinders (120) and fewer than all of the cylinders (120).

6. A reinforcement (100) as set forth in one of the preceding claims, wherein each cylinder (120) has two curved portions in cross-section and two straight portions in cross-section, wherein the curved portions are spaced from one another and the straight portions are substantially parallel to one another.

7. A reinforcement (100) as set forth in one of the preceding claims, wherein each cylinder (120) has a substantially oval cross-sectional shape and / or each cylinder (120) has a substantially hexagonal cross-sectional shape.

8. A reinforcement (100) as set forth in one of the preceding claims, wherein the carrier (105) includes a plastic and / or the carrier (105) includes a metal.

9. A reinforcement (100) as set forth in one of the preceding claims, wherein the bonding material (110) includes at least one of an expandable material and an adhesive.

10. A reinforcement (100) as set forth in claim 9, wherein the expandable material includes at least one of a structural foam and an acoustic foam.

11. A reinforcement (100) as set forth in one of the preceding claims, wherein the structure (115) includes at least two sidewalls (130) spaced from one another and wherein the carrier (105) is disposed between the two sidewalls (130).

12. A reinforcement (100) as set forth in claim 11, wherein each cylinder (120) has a length (L) that is smaller than a width (W) of the space (125) between the two sidewalls (130).

13. A reinforcement (100) as set forth in one of the preceding claims, further comprising a fixation element (135) disposed on at least one of the cylinders (120).
